(19)

Europäisches Patentamt
European Patent Office
Office européen des brevets

(11) **EP 2 256 895 A1**

(12) **EUROPEAN PATENT APPLICATION**

(43) Date of publication:
 **01.12.2010 Bulletin 2010/48**

(51) Int Cl.:
 *H02J 5/00* (2006.01)   *H02J 7/02* (2006.01)
 *H01F 38/14* (2006.01)

(21) Application number: **09161409.9**

(22) Date of filing: **28.05.2009**

(84) Designated Contracting States:
 **AT BE BG CH CY CZ DE DK EE ES FI FR GB GR HR HU IE IS IT LI LT LU LV MC MK MT NL NO PL PT RO SE SI SK TR**

(71) Applicants:
 • **Koninklijke Philips Electronics N.V.**
  **5621 BA Eindhoven (NL)**
 • **Philips Intellectual Property & Standards**
  **20099 Hamburg (DE)**

(72) Inventor: **The designation of the inventor has not yet been filed**

(74) Representative: **Damen, Daniel Martijn**
  **Philips**
  **Intellectual Property & Standards**
  **P.O. Box 220**
  **5600 AE Eindhoven (NL)**

(54) **Inductive power system and method**

(57)   A system (100) comprising a transmitting device (110) and a receiving device (130) is described. The transmitting device comprising a plurality of transmitter coils (120), the receiving device comprises a receiver coil (140) connectable to a mobile device. The receiving device is arranged to send data characterizing the geometry of the receiver coil to the power transmitting device, the transmitting device is arranged to determine, based on said data, a subset of transmitter coils to be activated when the receiving device is in the proximity of the transmitting device.

Figure 1a

EP 2 256 895 A1

**Description**

FIELD OF THE INVENTION

The invention relates to the field of inductive power systems enabling a wireless power transfer thereby e.g. charging mobile devices. It is in particular related to a system consisting of a number of transmitter cells which can individually be activated underneath a load.

BACKGROUND OF THE INVENTION

The communication of current and future electronics components, like cell-phones, PDA, remote controls, notebooks, lamps etc., will strongly use wireless technologies, like BlueTooth, Wireless-LAN, ZigBee etc. However, in most of the cases, these devices have local batteries, which are able to feed the devices for only a relative short time. To charge the batteries, an inductive power system enabling a wireless power transfer can be applied. Inductive power systems for transferring power or charging mobile devices are e.g. known from WO 2008/050260. Such a system in general comprises a transmitting device comprising a plurality of transmitter coils which can individually be energized, thereby generating an alternating magnetic field. The inductive power system further comprises a receiving device connectable or part of a mobile device that is to be charged or provided with power. In order to receive the power, the receiving device is provided with a receiver coil, in which the alternating magnetic field, provided by the energized transmitter coils, induces a voltage. This voltage can drive a load of the mobile device, e.g. charge a battery or light a lamp. To achieve the most benefit of a wireless power transfer, the positioning of the receiving device should not be limited, such that a free positioning with an arbitrary orientation of the receiver coil relative to the transmitter coils is possible.

In order to ensure an efficient power transfer between the transmitting coils and the receiving coil, only those transmitting coils that are sufficiently near the receiving coil should be energized in order to provide the power transfer. In US 7262700, it is proposed to, in order to detect the presence of a receiver coil, energize the transmitting coils in a sequential manner, and detect a feedback signal from the receiving coil, in case the receiving coil overlaps or is sufficiently near the energised transmitting coil. Based on the feedback signal or signals received, it is decided which transmitter coils can be activated or energized for the power transmission to the receiver coil.

Such an approach is however rather time consuming and energy consuming due to the sequential energising of the transmitting coils.

SUMMARY OF THE INVENTION

Invention aims at providing an inductive power system enabling a more efficient way of determining which transmitter coils are to be energized for realizing a power transfer.

To address this, in an aspect of the invention, a system is provided, the system comprising:

- a transmitting device comprising a plurality of transmitter coils; and
- a receiving device comprising a receiver coil intended to receive power from said transmitter coils,

wherein the receiving device is arranged to send to the transmitting device, data characterizing the geometry of the receiver coil;
and wherein the transmitting device is arranged to determine, based on said data, a subset of transmitter coils to be activated when the receiving device is in the proximity of the transmitting device.

The present invention also provides in a transmitting device for power transfer, the device comprising a plurality of transmitter coils intended to transfer power to a receiver coil of a receiving device, wherein the transmitting device is arranged to

- receive, when in the proximity of the receiving device, data characterizing the geometry of the receiver coil and,
- determine, based on said data, a subset of transmitter coils to be activated.

The system and transmitting device according to the invention enables to determine which subset of transmitter coils of a plurality of transmitter coils are to be activated based on the data characterizing the geometry of the receiver coil (in the following it is called geometric data) received from a receiving device.

In an embodiment, the transmitting device according to the invention or applied in the system according to the invention is further arranged to determine said subset of transmitter coils based on the position of a reference point of the receiver coil relative to the transmitting device. In the embodiment, the system or transmitting device according to the invention thus enables the position of a receiver coil of a receiving device to be determined relative to the transmitter coils of the transmitting device. Combined with geometric data about the receiver coil of the receiving device, the geometric data being provided by the receiving device to the power transmitting device, an accurate determination can be made which subset of coils of the plurality of transmitter coils are to be activated/energized in order to obtain an efficient power transfer.

The system according to the invention comprises a transmitting device comprising a plurality of transmitting coils. The plurality of transmitting coils are, in general, of the same size and arranged adjacent to each other, side by side. Other arrangements (having coils of different size and/or overlapping coils) are however possible as well. The transmitter coils can generate alternating magnetic flux which can be used for transmitting power, by means of an inductive coupling, to a receiver coil of a receiving device.

In an embodiment, the transmitting device according to the invention may further comprise a control unit for selectively activating/energizing the transmitter coils.

The system according to the invention further comprises a receiving device, in use co-operating with the transmitting device, which can e.g. be applied to transmit power to a mobile device. The transmitted power to the mobile device can e.g. be applied in the mobile device for charging a battery. In general, the receiving device of the system according to the invention, can be integrated in the mobile device and as such be connected to a battery of the mobile device or any other load (e.g. a lamp) of the mobile device requiring power. In order to transmit power, the receiving device as applied in a system according to the invention comprises a receiver coil arranged to, in use, receive, at least part of the alternating magnetic flux. Due to this inductive coupling, a voltage can be induced in the receiver coil, this voltage can be used to drive a load of a mobile device, e.g. charge a battery or light a lamp.

The mobile device may be: Mobile phone, Music player, Portable video player, Personal Digital Assistance (PDA), Hearing Aid, Remote control, Pointing device ("computer mouse"), Computer, Display (e.g. a computer monitor),

The mobile device may also be a rechargeable battery and it can be a module consisting of several separate batteries.

The mobile device may also be mobile sensors for example: blood pressure sensor, heart beat sensor, electro cardiogram (ECG), electro encephalogram (EEG), bio impedance, accelerometer, etc.

The receiving device as applied in the system according to the invention is further arranged to transmit geometric data characterizing the receiver coil to the transmitting device. Various well known means of communication can be applied for ensuring such transmission.

In an embodiment, the receiver coil of the receiving device can be used for transmitting a signal comprising said data or representing the geometrical data. As such, the functionality of transmitting data and receiving power can be combined using the same physical setup. Alternatively, the functionality of transmitting data may be independent of the power reception. As an example, the functionality of transmitting data can be provided by a larger data transmission coil surrounding the (power) receiver coil.

In an embodiment, the transmitting device as applied in the system according to the invention is arranged to receive the transmitted data (i.e. the geometric data) and determine a position of the receiver coil relative to the transmitting device based on the geometric data received. Various well known means of communication can be applied for ensuring such reception of the transmitted data. One of the transmission coils can e.g. be used for receiving the transmitted data. In an embodiment, all of the plurality of transmitting coils are arranged to receive the signal comprising transmitted data. The data received can e.g. be provided to a control unit of the transmitting device. As an alternative to the transmission coils themselves receiving the signal, the transmitting device can be provided with one or more data receivers for receiving the transmitted geometric data from the receiving device. Such a data receiver can e.g. take the form of a coil which can cover part of a transmitter coil, or might even cover several transmitter coils. In an embodiment, each transmitter coil can as such be provided with a data receiving coil or circuit, e.g. arranged adjacent, inside or outside each transmitter coil.

In an embodiment, the transmitting device is further arranged to detect if a receiving device is near the transmitting device. Such detection can be realized in various ways. The receiving device can e.g. be provided with a magnetic component which could be detected by the power transmitting device, e.g. using a sensor or from a change in characteristic of one of the transmitter coils. When e.g. a ferromagnetic component is used in the receiving device, bringing such a component near a transmitting coils will affect the inductance of the coil, which can e.g. be detected.

As a further embodiment, a permanent magnet can be applied in the receiving device whereby the magnetic field of the permanent magnet can be detected by the transmitting device using a dedicated sensor or using one or more of the transmitting coils of the power transmitting device.

Based on the geometric data, the transmitting device can determine a subset of transmitter coils to be activated when the receiving device is in the proximity of the transmitting device. Within the meaning of the present invention, a transmitting device and receiving device are considered to be close to each other when a data and/or power exchange is possible between both devices. In practice, when a receiving device is brought near a transmitting device such that the transmitting device can detect the presence of the receiving device (as e.g. described above), both can be considered to be close to each other.

In order to determine the subset of coils to be activated, the transmitting device of the system according to the invention is, in an embodiment, arranged to determine a position of the reference point of the receiver coil relative to the transmitting device. This can be realized in various ways which will be explained in more detail below.

In an embodiment, the transmitting device is arranged to determine a position of a reference point of the receiving coil relative to the transmitting device, the subset of transmitter coils is determined based on the geometry data and the position of the reference point of the receiver coil relative to the transmitting device. As a reference point, in an embodiment, the receiving device can be provided with component such as a permanent magnet or an RFID tag or the like. Determining the position of the reference point of the receiving device relative to the transmitting device can be done in various ways, which are explained in more detail below. Combining the position of the reference point and geometric data of the receiver coil enables the transmitting device to determine the position of the receiver coil relative to the power transmitting device as well as to determine the subset of transmitter coils to be activated. In an embodiment, position of the reference point is selected to correspond to a central position of the receiver coil. As an example, in case of a circular receiver coil,

In an embodiment, the transmitting device is further arranged to determine an orientation of the receiver coil relative to the power transmitting device. In order to determine which transmitting coils are in an advantageous position relative to the receiver coil for transmitting power, it may be advantageous to determine the orientation of the receiver coil as well. In an embodiment, the orientation of the receiver coil is obtained from determining the position of two reference points of the receiving device relative to the power transmitting device. Preferably, the two reference points are separated from each other as far as possible. They can e.g. be selected on opposite sides of the receiver coils. As mentioned above, as a reference point, the receiving device can be provided with component such as a permanent magnet or an RFID tag or the like.

Regarding the determination of the position of the reference point of the receiver coil relative to the transmitting device, it is worth noting that a control unit can provided for performing this task. The control unit can e.g. be provided with a computational unit (e.g. a microprocessor or the like) for performing the required calculations. In addition, such a control unit may further be applied for selectively activating the subset of transmitter coils of the transmitting device.

The system according to the invention is further arranged to activate, based on the geometric data, a subset of the transmitter coils. In an embodiment, when the position of the receiver coil relative to the transmitting device and thus the plurality of transmitter coils, is known, the transmitting device can e.g. determine, for each of the transmitter coil whether or not they are in a position relative to the receiver coil that enables them to transmit power to the receiver coil. Different criteria can be applied in order to make the selection. As an example, based on the relative position, an overlap between the transmitting coil and the receiver coil can be determined and used as a criterion to activate/energize a coil or not. In an embodiment, only those coils which are located between an inner and outer contour of the receiver coil, are energized. As an advantage of such a selection, the power transfer can be made more efficient. Such an approach reflects the insight, that transmitting coils that are located inside the inner contour of the receiver coil contribute less to the power transfer. Therefore, the losses generated in these coils when energized may exceed the benefit of transmitting somewhat more power.

Whether or not a coil is located inside or outside a contour of the receiver coil can e.g. be assessed by examining if a centre point of the coil is inside or outside the contour. Other criteria such as the percentage of overlap can be considered as well.

In an embodiment, the selection of the coils to be activated further comprises selecting one or more of the transmitting coils that are located outside the outer contour of the receiver coil and energizing these coils in anti-phase. In a preferred embodiment, the same number of coils is activated in anti-phase (coils outside the outer contour) and in phase (coils located inside the outer contour). Doing so provides the advantage of reducing the magnetic far field, due to the compensating effect of the coils. In addition to the far field compensation effect, energizing the mentioned coils in anti-phase has also been found to enhance the magnetic flux level of the coils inside the outer contour and may thus improve the inductive power transfer. This effect has been noticed in case the coils that are operated in anti-phase are located outside, but close to the outer contour of the receiver coil.

In an embodiment, the receiving device of the system according to the invention is further arranged to transmit electric data regarding the receiver coil or the mobile device to be powered, to the power transmitting device. Such electric data can e.g. enable the transmitting device to power the transmitting coils in a manner best suited for the receiver coil or mobile device. Such electric data can e.g. describe the maximum voltage that can be induced in the receiver coil, a frequency of the alternating magnetic flux, etc...., in general, the power requirements of the receiver coil.

According to an aspect of the present invention, a method of transmitting power from a transmitting device comprising a plurality of transmitter coils to a receiving device comprising a receiver coil, the method comprising steps of:

- Receiving by the transmitting device, when in the proximity of the receiving device, data characterizing geometry of the receiver coil,

- determining, based on said data, a subset of transmitter coils to be activated.

The method may further include one or more of the following steps:

- determining a position of a reference point of the receiver coil relative to the transmitting device, wherein determining said subset of transmitter coils is further based on said position.
- detecting an orientation of the receiver coil relative to the transmitting device, wherein determining said subset of transmitter coils is further based on the orientation of the receiver coil relative to the transmitting device
- determining the position of the reference point according to a center of gravity of signals intensity, said signals being received by the plurality of transmitter coils and originating from the receiver device.
- receiving, when in the proximity of the receiving device, an activation pattern and/or electric data from the receiving device, wherein determining said subset of transmitter coils further based on the activation pattern and/or electric data.
- determining the position of the receiver coil using a pattern-recognition algorithm thereby matching a signal intensity pattern measured by the transmitter coils and originating from the receiving device with the data characterizing the geometry of the receiver coil.
- determining a further subset of the transmitter coils to be activated in anti-phase.
- receiving, when in the proximity of a further receiving device, further electric data characterizing a receiver coil of the further receiving device and determining the subset of transmitter coils to be activated based on the further electric data received.

According to yet another aspect of the invention, there is provided a receiving device comprising a receiver coil, the receiving device being intended to receive power from a transmitting device comprising a plurality of transmitter coils, the receiving device being arranged to send, when in the proximity of a transmitting device, data characterizing the geometry of the receiver coil to the transmitting device.

The receiving device according to the invention may further be arranged to send, when in the proximity of the transmitting device, an activation pattern and/or electric data from the receiving device to the transmitting device.

The receiving device according to the invention may further comprise a reference point (e.g. a magnetic element or an RFID tag) for facilitating the position of the receiver coil relative to the transmitting device to be determined.

These and other aspects of the invention will be more readily appreciated as the same becomes better understood by reference to the following detailed description and considered in connection with the accompanying drawings in which like reference symbols designate like parts.

BRIEF DESCRIPTION OF THE DRAWINGS:

Fig. 1a schematically depicts an embodiment of a system according to the invention.
Fig. 1b schematically depicts another embodiment of a system according to the invention.
Fig. 2 schematically depicts a first arrangement of transmitter coils and a receiver coil and a selection of activated coils.
Fig. 3 schematically depicts a second arrangement of transmitter coils and a receiver coil and a selection of activated coils.
Fig. 4 schematically depicts a third arrangement of transmitter coils and a receiver coil and a selection of activated coils.
Fig. 5 schematically depicts a fourth arrangement of power transmitter coils and a receiver coil and a selection of activated coils.
Fig. 6 schematically depicts an arrangement of transmitter coils and internal receiver coils of a transmitting device and a receiver coil of a receiving device.

DETAILED DESCRIPTION OF THE EMBODIMENTS

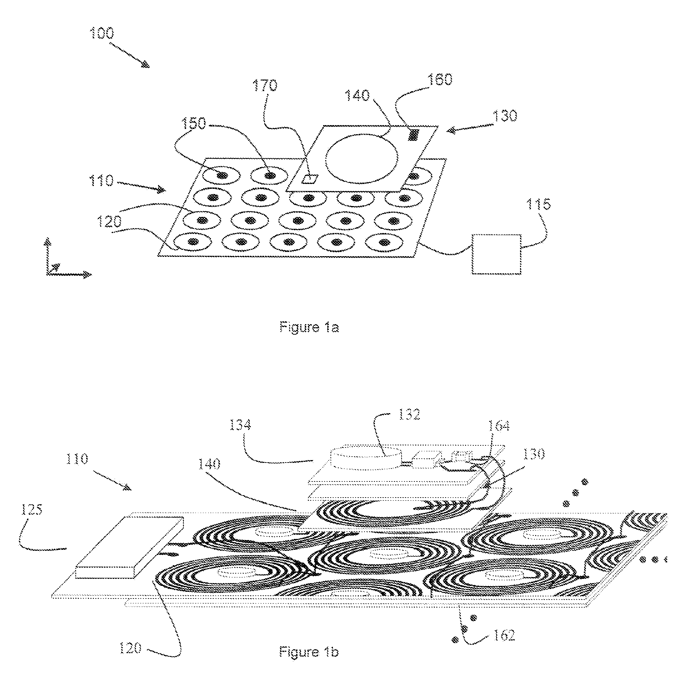

Fig. 1a schematically shows an embodiment of the system according to the invention. As shown, the system 100 with transmitting device 110 comprising a plurality of transmitter coils 120 arranged side by side. As an alternative, the coils may also overlap and/or have different sizes. The transmitting device 110 further comprises a control unit 115 for selectively activating the transmitter coils 120. The system further comprises a receiving device 130 comprising a receiver coil 140. In the embodiment as shown, each transmitter coil is further provided with communication means (i.e. a data transmitter and/or receiver) 150 for communicating with the receiving device. The data transmitter and or receiver may be independent of the transmitter coil. As an alternative, or in addition, the transmitter coils 120 can be applied to communicate with the receiving device, e.g. to receive data regarding the receiver coil or to receive a signal in order to detect the presence of the receiving device 130 near the transmitting device 110. In such an arrangement the power transmitting functionality of the transmitter coils is integrated with the communication functionality and can use the same physical setup. Similarly, the receiving device 130 can comprise a separate data transmitter 160 for transmitting data to the transmitting device or the receiver coil 140 can be applied for this purpose. Optionally, the receiving device 130 can comprise one or more reference points 170 which can be detected by the transmitting device 110.

Using the communication means as described below, the system according to the invention enables the determination of the position of the reference point relative to the transmitting device 110. Using this position information and the geometry data, the system according to the invention facilitates in the selection, by the control unit 115, which transmitting coils are preferably activated in order to obtain an efficient power transmission from the transmitting device to the power receiving device.

In order to facilitating power transfer between the transmitting device and the receiving device, data and/or signals are exchanged between the receiving device and the transmitting device.

The communication between the receiving device and the transmitting device can be realised in various manners:

- As a communication method between the receiving device and the transmitting device, known analogue and/or digital communication principles can be implemented.
- During the transmission of power, the power signal could be used as a carrier on which data is modulated by means of analogue and/or digital modulation principles.
- The communication can be realized by using the transmitter coil(s) in a twofold way: As a transmitter coil to transmit an alternating magnetic field but also as communication coil to transmit/receive data to/from the receiver(s).
- As an alternative or in addition to using the transmitting coils for communication purposes, other communication structures, related to different communication principles can be implemented. Such structures can e.g. be based on:

  i. Inductive coupling, and/or
  ii. electromagnetic coupling mechanisms (which can e.g. includes any wireless communication module based on e.g. Bluetooth, zigbee, DECT, GSM, NFC, etc.).

The before mentioned communication structures might be realized by only one common structure but also by several different ones, distributed in/on the transmitter station. - In addition to the above mentioned coupling mechanisms for power transfer and communication also other means of communication based on different physical quantities such as e.g. optical (visible but also infrared), vibration, ultrasonic, pressure, thermal, etc. can be used to establish communication between the receiving device and the power transmitting device.

The operation of the device according to the invention as schematically shown in Fig. 1a can be explained in more detail as follows:

When the receiving device 130 is brought near the transmitting device 110, the receiving device 130 can be arranged to transmit geometric data about the receiver coil to the transmitting device 110 (e.g. by wireless communication (e.g. by Near Field Coupling (NFC) data transmission).

Within the meaning of the present invention, the transmitting device and the receiving device are considered near each other when both a sufficiently close to each other such that a power transfer can be realised using inductive coupling between the transmitter coils and the receiver coils. As a practical example, the power transmitting coils can e.g. be integrated in a top surface of a table whereas the receiving device can be integrated in a mobile device such as a mobile telephone or a laptop. When the mobile device is placed on the table, the receiving device integrated in the mobile device will, in general, be sufficiently near the power transmitting coils for receiving power for powering the mobile device.

In order to detect the presence of a power receiving device, the transmitting device as applied in the system according to the invention can be equipped with any of the communication means mentioned above.

As an example, in the embodiment of the system as shown in Fig. 1a, each transmitter coil is further provided with communication means (i.e. a data transmitter and/or receiver) 150 for communicating with the power receiving device. A transmitter coil combined with a communication means is further also referred to as a transmitter cell. In the arrangement as shown, each cell is able to both establish a data connection (using the communication means 150) with the receiving device and to provide power to the receiving device. In order to detect the presence of a receiving device, the transmitter cells may try to establish a connection to a receiving device, either sequentially, in parallel or in a mixture of both. If one or more cells can establish a connection, the receiver device is "detected".

Note that, as already mentioned above, the detection of a receiving device can also be established on the basis of a change in characteristic of one of the transmitting coils, such as a change in an inductance value of a transmitter coil when e.g. a ferromagnetic component is used in the power receiving device. Alternatively, the receiving device can e.g. be provided with a magnetic component such as a permanent magnet which could be detected by the power transmitting device, e.g. using a sensor.

In an embodiment, in case a receiving device is detected, one transmitter cell can be selected as "primary" cell, which can be used for further communication.

If only one transmitter cell can establish a connection, this cell will be considered as "primary" cell. If there exists more than one cell which can establish a connection to the power receiver device, each cell may measures the signal strength of the data connection. The cell with the largest signal may then be selected as "primary" cell.

Fig. 1b schematically depicts a 3D-view another system according to the invention. The figure schematically depicting a transmitting device 110 comprising a plurality of transmitter coils 120 arranged side by side. The transmitting device is arranged to selectively activating the transmitter coils 120 from a generator 125. The system further comprises a receiving device 130 comprising a receiver coil 140. The receiving device of the system as shown is connected to a mobile device comprising a rectifier 132 and a rechargeable battery 134. In the system as shown, each transmitter coil is further provided with communication means (i.e. a data transmitter and/or receiver) 150 for communicating with the power receiving device. The system is further equipped with shielding plates 162 and 164, e.g. comprising a ferromagnetic material.

Upon establishing a data connection, the receiving device of the system according to the invention, sends information about the physical size of the receiver coil (also referred to as geometric data) to the transmitting device. Typical parameters can e.g. include:

- Outer diameter of the power receiver coil
- Inner diameter of the power receiver coil
- Shape of the power receiver coil, e.g. round, square, hexagonal Parameters for a non-concentric shape with two different dimensions are
- Shape, e.g. rectangular, stadium, ellipse
- Outer length of long axis
- Outer length of short axis
- Inner length of long axis
- Inner length of short axis

Optionally, other than geometric data regarding the receiver coil can be provided to the transmitting device. Such data can include but is not limited to:

- Diameter of a shielding plate of the power receiver device
- Number of cells which can be activated
- Maximum number of cells to be activated
- Minimum number of cells to be activated
- Optimal activation pattern
- Number of receiver coils
- Position of one or more reference points of the receiving device relative to the receiver coil.
- Maximum magnetic field strength.

When a position of a reference point of the receiving coil relative to the transmitting device is already known by the transmitting device, and when the transmitting device is provided with the geometric data about the receiver coil, the transmitting device of the system according to the invention can determine a subset of transmitting coils to be activated.

The position of the reference point can be known by the transmitting device for example, marking the reference point of the receiver coil on the surface of the receiving device, and there is a mark on the surface of transmitting device guiding the user to put the mark of the receiving coil overlapped with the mark on the transmitting device, as a result, the transmitting device knows exactly the position of the reference point of the transmitter coil.

If the position of the reference point is not known, the system need to perform a step of determining the position of the reference point of a receiver coil relative to the transmitting device. Several methods for realising this are described below.

The reference point, for example can correspond to the center of the receiver coil.

In a first method, the position of a selected primary cell (see above), e.g. the transmitter cell which has received the largest signal from the power receiving device, is considered to coincide with the centre of the communication means which provided the signal. In case the signal was provided by the receiver coil, the position of the selected primary cell is thus assumed to correspond to the position of the centre of the receiver coil and thus correspond to the position of the reference point of the receiver coil.

In a second method, all transmitter cells, which can establish a connection to the receiving device (e.g. are able to receive a signal from the device), contribute to the determination of the position of the reference point of the receiver coil relative to the transmitting device.

Assuming the positions of the cells are described by their coordinates $x_i$, $y_i$ in a plane comprising the coils, where $i$ is the index of the individual cells. The signal strength of each cell is described by the amplitude $A_i$. A centre position $x_0$, $y_0$ may then be calculated as the average of all positions $x_i$, $y_i$ weighted with the Amplitude $A_i$. As equation it is:

$$x_0 = \sum_i \left( A_i \cdot x_i \right) \qquad y_0 = \sum_i \left( A_i \cdot y_i \right)$$

$$, \hspace{10cm} (1)$$

This procedure is similar to calculating the centre of gravity of e.g. different stones on a board. The centre position (x0,y0) can thus be considered to correspond to the centre position of the receiver coil (in case the signal is provided by the receiver coil) and thus can be considered as the position of the reference point of the receiver coil.

In an embodiment, a linear dependence between the signal strength and the amplitude factor $A_i$ can be assumed. In a more sophisticated embodiment, the amplitude factor $A_i$ may be a more complicated function of the signal strength. In a simplified embodiment, $A_i$ is neglected and thus set to one. This may reduce the calculation effort, but may however result in a less precise position.

In above two embodiments, in case the reference point is not located in a central position of the receiver coil, the position of the reference point relative to the receiver coil may also be provided to the transmitting device when the geometric data regarding the receiver coil is provided (i.e. transmitted).

In a third method, the pattern of the signals obtained by the different cells is matched to the expected shape of the receiver coil, which is known from the transmitted geometric data. As an example, a 2-dimensional correlation function can be used, similar as in pattern recognition. The result of this function is a map with a distinct peak, which is then related to the position of the receiver. An important advantage of such a pattern-recognition algorithm is that it enables to determine an orientation of the receiver coil (in case the receiver coils has a non-concentric shape) relative to the power transmitting device.

In a fourth method, the transmitting device uses a data feedback from the power receiver device. In this method, the position of a selected primary cell is considered as a first rough estimate. Subsequently, all cells that might be within the range of the receiving device are activated to transfer power. The relevant cells, i.e. the cells which could be in the range, are derived from the geometric data of the receiver coil. These cells are then activated sequentially, one after the other. Preferable, the cells are activated with a reduced power level. In response to the activating, the receiving device can measure the received power signal (e.g. by means of the induced voltage) and transmits this information (i.e. feedback) to the transmitting device. The transmitting device (or a control unit of the power transmitting device) can e.g. relate the power signal to the position of the activated cell. The data feedback as obtained can subsequently be used to determine the position of the receiver coil similar to the previous described methods.

The method applying data feedback can be used both for determining the position of the receiver coil relative to the transmitter coils or for refining/adjusting a computed relative position. As an example, in a first step, the first method as described above is applied to determine the relative position. As this method is comparatively coarse, it can be used to determine the relevant cells (see above). Based on data feedback obtained from a sequential activating of the relevant cells, a more accurate relative position can be determined.

In case the receiver coil has a non-concentric shape, it may be not sufficient to know only the centre of the receiver device, but in addition, the orientation of the receiver coil relative to the transmitting device should be detected as well, in order to improve the determination of the position of the receiver coil relative to the power transmitting device. The orientation can e.g. be detected by:

- Determining the position of two reference point of the power receiving device. Their positions relative to the receiver coil (or coils) can e.g. be sent to the transmitting device together with the geometric data. The position of both reference points can e.g. be determined using one of the previous methods. From these two positions, the orientation can easily be determined.
- Selecting two cells of all cells, which receive or generate a signal above a certain threshold, *and* which are most far apart from each other. These two cells can be considered as the endpoints of a long axis of the receiver coil of the power receiving device. The connection line between these points thus determines the orientation of the receiver coil. The centre of the receiver coil can be determined by one of the previously mentioned methods.
- Using a pattern recognition algorithm applied to the pattern detected from the received signals or data feedback.

Once the position (and optionally the orientation) of the reference point of the receiver coil relative to the transmitting device is determined, the transmitting device of the system according to the invention selects, based on the position and the geometric data of the receiver coil, can determine which transmitter coils to be activated for establishing a power transfer to the power receiving device.

This selection can be made in various ways as described below. Which way of selecting the coils to be activated can e.g. be based on information transmitted by the receiving device to the transmitting device. The receiving device can thus transmit information either which cells should be energized (e.g. transmitting coils within a certain range of the centre position of the receiver coil) or which criterion or method should be applied for the selection.

The following comparatively simple algorithms have been found useful:

- All cells located within an outer contour of the receiver coil are energized.

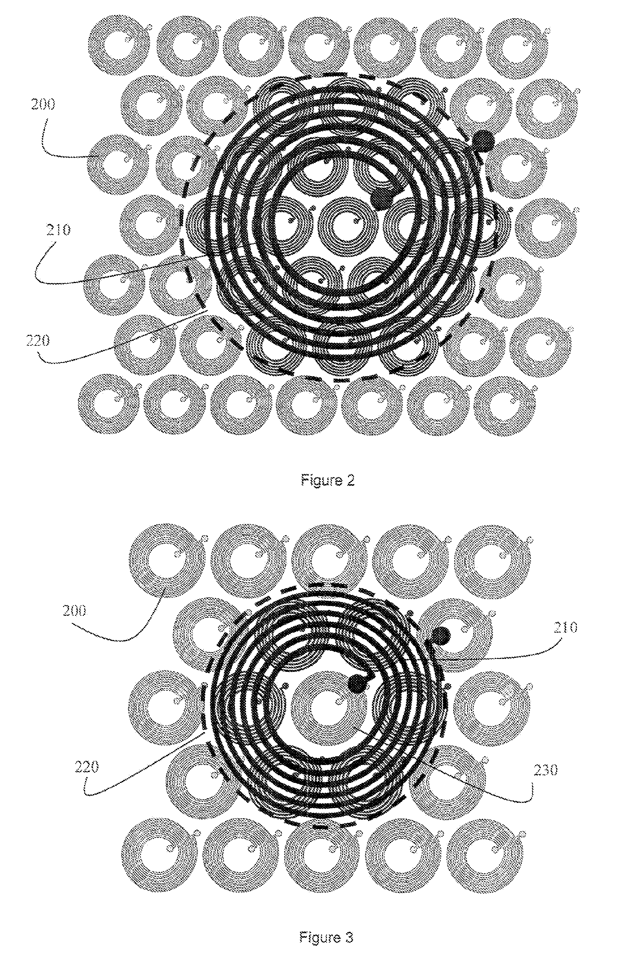

Such an arrangement is schematically depicted in Fig. 2. Fig. 2 schematically depicts a first arrangement of power transmitting coils 200 and a receiver coil 210 and a selection of energized coils (the transmitter coils arranged inside the dotted contour 220).

- All cells located underneath a shielding plate are energized.
- All cells that were able to establish a data connection are energized. This approach may allow power transfer to non-concentric shaped receiver coils without a dedicated detection of the orientation.

The following more sophisticated algorithms can also be considered:

- The number of cells as specified by the power receiving device, e.g. during a geometric data transmission, which are located around the determined centre position, are energized.
- Those cells, which have received a signal or result in a data feedback above a threshold, are energized.
- The number of cells as specified during a geometric data transmission, which have the highest signal associated, are energized.

Note that the previous two methods may allow power transfer to non-concentric shaped receivers without a dedicated detection of the orientation.

- Only those cells, which are located between the inner and outer contour of the receiver coil, are activated. It has been observed that the power transfer can be more efficient with such an algorithm or method. This reflects the insight, that cells that are located at the inner part (i.e. inside the inner contour) contribute less to the power transfer. The losses which are generated in those cells may thus exceed the benefit of generating somewhat more power.

Such an arrangement is schematically depicted in Fig. 3 where, compared to Fig. 2, coil 230 is not energized.

In addition to the application of one of the methods as described above, a number of transmitting cells arranged outside the outer contour, can be energized in anti-phase. Preferably the same number of coils is activated in anti-phase. It has been observed that this has the advantage that the magnetic far field can be reduced. In addition to a far field compensation effect, the anti-phase coils may also enhance the magnetic flux level of the coils inside the outer contour and may thus even improve the inductive power transfer. This aspect has been observed when the coils operated in anti-phase are located outside, but close to the outer contour of the receiver coil.

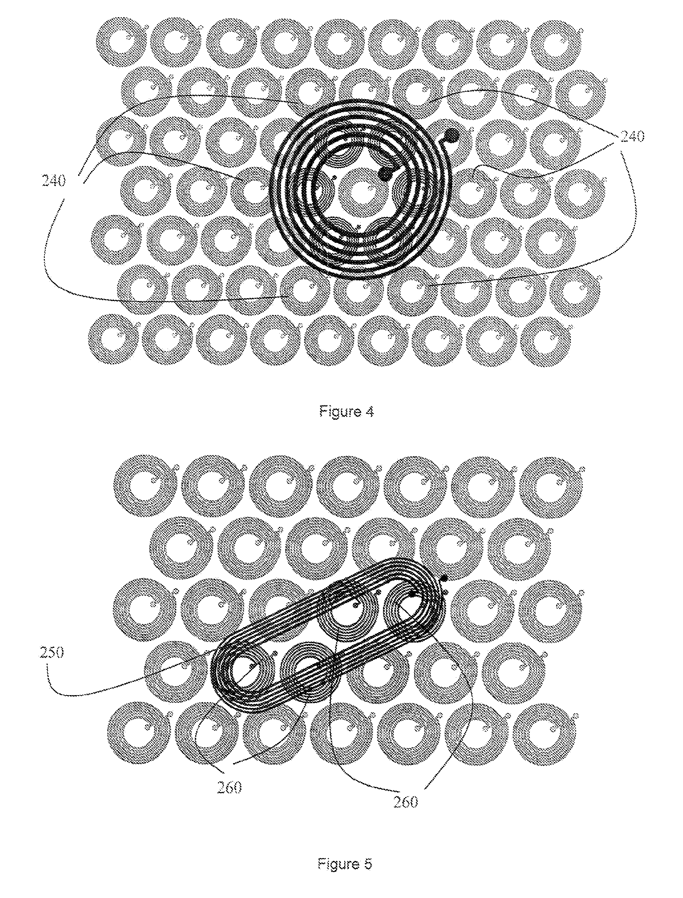

Such an arrangement is schematically shown in Fig. 4 where, compared to Fig. 3 the six transmitter coils 240 are energized in anti-phase.

Fig. 5 schematically depicts an arrangement of a non-concentric receiver coil 250 and the selection of energized transmitter coils, indicated by reference number 260.

A further method for selecting the transmitter coils (or cells) to be energized is to apply an "optimal activation pattern", wherein the position of the receiver coil as determined is used as reference. As a pre-requisition for the definition such a pattern, the size of the actual transmitter coil as applied in the transmitting device should match the transmitter coil size applied when defining the pattern. In an embodiment, the "optimal activation pattern" is not a fixed pattern stored in the power receiving device, but is calculated by the receiving device during a data exchange phase. As mentioned, the receiving device as applied in the system according to the invention is arranged to transmit geometric data regarding the receiver coil to the power transmitting device. Similarly, in an embodiment of the invention, the transmitting device as applied can be arranged to transmit geometric data regarding the plurality of transmitter coils to the power receiving device. By such a geometric data exchange, the optimal activation pattern can be made to match the size and position of the actual transmitter coils of the power transmitting device. The algorithm for such an "optimal activation pattern" can e.g. be generated by the manufacturer of the power receiving device. The "optimal activation pattern" can also include a specification of a certain amplitude, phase or direction of the alternating magnetic flux to be generated by the transmitter coils of the power transmitting device.

In an embodiment, the transmitting device as applied in the system according to the invention further comprises at least one internal receiving cell, whereby the transmission behaviour between each of the transmitter cells and (each of) the internal receiving cells is characterized (defined by measuring the transmission performance). This kind of calibration allows for detecting any change of the transmission behaviour. By means of selectively activating each of the transmitter coils and measuring the transmitted power to the internal receiving coils it can be defined whether a receiving device is above the activated transmitter coil or not. In addition, the receiving device may also communicate the received power level to the transmitting device in order not to introduce unwanted losses in arbitrary metals as e.g. keys above the transmitter coils.

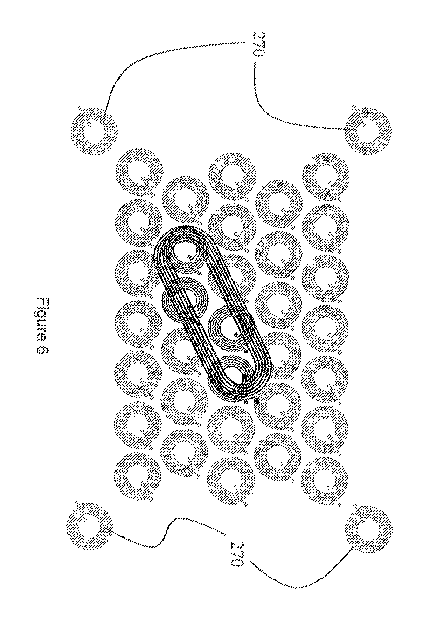

Using such an embodiment, it is equally possible to energize only those transmitter cells which are covered by the power receiver device's receiver coil or coils. The basic principle with exemplarily 4 internal receiving coils 270 for measuring the variation of the transmitted power is shown in Fig. 6.

In an embodiment of the system according to the invention, the plurality of transmitter cells can be arranged to regularly attempts to detect a power receiving device. If such a device is detected, the system can be arranged to have the remaining cells try to detect a further device. To reduce the effort needed for the detection, all cells which are identified to be covered by a receiver coil are excluded from further detection search. This is especially advantageous, if the detection is done in a sequential way, because the search among the remaining cells can become faster.

In an embodiment, more cells can be excluded cells than the cells that are energized or activated. All cells covered by the housing of the receiving device can be excluded. Similarly, transmitter coils arranged inside an inner contour of the receiver coil and which are not energized, can be excluded. On the other hand, cells, which are used for compensation purpose (and are operated in anti-phase) and are not covered by the housing, can still be used in the detection search for a receiver coil.

As described above, the system according to the invention enables an accurate determination of the position of a receiver coil relative to a plurality of transmitter coils. Based on this position, one can determine, for each transmitter coil to what extent it overlaps with the receiver coil. This allows a fine-tuning of the power transmission operation of the power transmitting device:

If, based on the determined position of the receiver coil and a transmitter coil, it is determined that the transmitter coil is not fully covered by the receiver coil, it can be decided to operate the transmitter coil at a reduced (less than nominal) power level thereby possibly reducing the magnetic field radiated towards a user (human body irradiation). If transmitter coils are found that are not fully covered by a receiver coil, their magnetic radiation level can e.g. be limited according to a look-up table, where maximal feeding currents depending on the received signal levels are saved. In addition, a magnetic field sensor can be implemented in the power transmitting device, which is able to capture the magnetic field and can be used as feed-back device in order to check, whether magnetic emission is within the limitations or not.

As indicated above, apart from transmitting geometric data about the receiver coil, further information about the receiving device can be provided by the receiving device as applied in the system according to the invention. Such information or data can e.g. include a maximum power level or magnetic field level the power receiver device can accept. Combined with an accurate determination of the position of the receiver coil relative to the transmitter coils, the system according to the invention further enables multiple power receiving devices to be provided with power at the same time substantially without the risk of damaging any of the devices.

As such, in an embodiment, the system according to the invention is particularly suited for powering multiple power receiving devices at the same time, even when the receiver coils of the devices a located close to each other. In an embodiment, the system according to the invention comprises two or more power receiving devices and one transmitting device for transmitting power to the devices. In such an embodiment, the transmitting device can be arranged to receive electric data regarding the two or more power receiving devices as indicated above. In such a situation, the transmitting device can be arranged to take into account the electric data received in the selection process establishing which coils are to be energized. Assuming a situation where a comparatively low-receiving device is positioned adjacent a comparatively high-power receiving device. In such a situation, it may occur that transmitter coils overlap with receiver coils of both devices. In such a situation, the transmitting device can define, based on the electric data received, a maximum current which can be applied to the transmitter coils in such a manner, that the low-receiving device is not destroyed. I.e., the total magnetic flux emitted by the transmitter cells/coils and received by the low-power receiver coil (s) can be limited thereby protecting low power receivers for damages.

The system, transmitting device and receiving device according to the invention may advantageously be applied to facilitate inductive power transfer for various applications. Some examples are the application of the receiving device according to the invention in a mobile phone, a notebook, a lamp or a kitchen appliance. The transmitting device according to the invention can e.g. be incorporated in a top surface of a table thus enabling a mobile device such as a mobile phone or notebook to be provided with power when positioned on the surface.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly, and not necessarily mechanically.

**Claims**

1. A system comprising:

   - a transmitting device comprising a plurality of transmitter coils; and
   - a receiving device comprising a receiver coil intended to receive power from said transmitter coils,

   wherein the receiving device is arranged to send to the transmitting device, data characterizing the geometry of the receiver coil;
   and wherein the transmitting device is arranged to determine, based on said data, a subset of transmitter coils to be activated when the receiving device is in the proximity of the transmitting device.

2. A transmitting device for power transfer, comprising a plurality of transmitter coils intended to transfer power to a receiver coil of a receiving device, wherein the transmitting device is arranged to:

   - receive, when in the proximity of the receiving device, data characterizing the geometry of the receiver coil and,
   - determine, based on said data, a subset of transmitter coils to be activated.

3. A transmitting device according to claim 2, further arranged to determine said subset of transmitter coils based on a position of a reference point of the receiver coil relative to the transmitting device.

4. A transmitting device according to claim 2 or 3, further arranged to detect an orientation of the receiver coil relative to the transmitting device, wherein determining said subset of transmitter coils is further based on said orientation.

5. A transmitting device according to claim 2 or 3, further arranged to receive, when in the proximity of the receiving device, an activation pattern and/or electric data from the receiving device, wherein determining said subset of transmitter coils is further based on the activation pattern and/or electric data.

6. A transmitting device according to claim 3, further arranged to determine the position of the reference point according to a center of gravity of signals intensity, said signals being received by the plurality of transmitter coils and originating from the receiving device.

7. A method of transmitting power from a transmitting device comprising a plurality of transmitter coils to a receiving device comprising a receiver coil, the method comprising steps of:

   - Receiving by the transmitting device, when in the proximity of the receiving device, data characterizing geometry of the receiver coil,
   - determining, based on said data, a subset of transmitter coils to be activated.

8. A method according to claim 7, further comprising a step of determining a position of a reference point of the receiver coil relative to the transmitting device, wherein determining said subset of transmitter coils is further based on said position.

9. A method according to claim 7 or 8 further comprising a step of detecting an orientation of the receiver coil relative to the transmitting device, wherein determining said subset of transmitter coils is further based on the orientation of the receiver coil relative to the transmitting device.

10. A method according to claim 8 wherein said determining step determines the position according to a center of gravity of signals intensity, said signals being received by the plurality of transmitter coils and originating from the receiving device.

11. A method according to claim 7 or 8 further comprising a step of receiving, when in the proximity of the receiving device, an activation pattern and/or electric data from the receiving device, wherein determining said subset of transmitter coils further based on the activation pattern and/or electric data.

12. A method of receiving power by a receiving device comprising a receiver coil, said receiving device being intended to receive power from a transmitting device comprising a plurality of transmitter coils, the method comprising a step of:

- Sending by the receiving device, when in the proximity of the transmitting device, data characterizing the geometry of the receiver coil to the transmitting device; wherein said data are intended to be used by the transmitting device for determining a subset of transmitter coils to be activated.

13. A method according to claim 12, further comprising a step of sending by the receiving device, when in the proximity of the transmitting device, an activation pattern and/or electric data to the transmitting device, wherein determining said subset of transmitter coils further based on the activation pattern and/or electric data.

14. A receiving device comprising a receiver coil, the receiving device being intended to receive power from a transmitting device comprising a plurality of transmitter coils, the receiving device being arranged to send, when in the proximity of a transmitting device, data characterizing the geometry of the receiver coil to the transmitting device, wherein said data are intended to be used by the transmitting device for determining a subset of transmitter coils to be activated.

15. A mobile device comprising a receiving device according to claim 14, said mobile device being arranged to receive power from said receiving device.

100

170    140    160

150    130

110

120    115

Figure 1a

134    132    164

110    130

125    140

120    162

Figure 1b

200

210

220

Figure 2

200

210

220

230

Figure 3

Figure 4

Figure 5

Figure 6

**EUROPEAN SEARCH REPORT**

Application Number

EP 09 16 1409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/202665 A1 (HSU FENG-HSIUNG [US]) 14 September 2006 (2006-09-14) * page 1, lines 1,2 * * paragraphs [0018] - [0020] * * paragraphs [0028], [0029] * * figures 1,2,6 * | 1,2,5,7, 11-15 | INV. H02J5/00 H02J7/02 H01F38/14 |
| X | RYUICHI KURAKAKE ET AL: "Magic Surfaces: A Smart Building Material for Indoor Sensing Infrastructures" NETWORKED SENSING SYSTEMS, 2007. INSS '07. FOURTH INTERNATIONAL C ONFERENCE ON, IEEE, PI, 1 June 2007 (2007-06-01), pages 213-220, XP031131594 ISBN: 978-1-4244-1231-0 | 1-3,7,8, 12,14,15 | |
| Y | * abstract * * paragraph [II.A] * * paragraph [II.B] * * paragraph [III.A] * * paragraph [III.B] * * figures 1,2 * | 4,9 | |
| Y | GB 2 399 228 A (SPLASHPOWER LTD [GB]) 8 September 2004 (2004-09-08) * page 27, lines 1-17 * * page 37, lines 26-32 * * figures 9a-9c * | 4,9 | TECHNICAL FIELDS SEARCHED (IPC) H02J H01F |

The present search report has been drawn up for all claims

| Place of search | Date of completion of the search | Examiner |
|---|---|---|
| The Hague | 24 November 2009 | Rocha, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 16 1409

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2009

| Patent document cited in search report | Publication date | Patent family member(s) | | Publication date |
|---|---|---|---|---|
| US 2006202665 A1 | 14-09-2006 | NONE | | |
| GB 2399228 A | 08-09-2004 | GB | 2399225 A | 08-09-2004 |
| | | GB | 2399226 A | 08-09-2004 |
| | | GB | 2399227 A | 08-09-2004 |
| | | GB | 2399229 A | 08-09-2004 |
| | | GB | 2399230 A | 08-09-2004 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008050260 A

- US 7262700 B